# EUROPÄISCHE PATENTSCHRIFT

(11) **EP 2 262 383 B1**
(45) Veröffentlichungstag und Bekanntmachung des Hinweises auf die Patenterteilung: **29.07.2015**
(21) Anmeldenummer: 09730487.7
(22) Anmeldetag: 14.04.2009
(51) Int. Cl.: A23L 2/52, A23L 2/00, A23L 2/68, A23L 2/84, C12G 3/02, A23L 2/56

(54) **ERFRISCHUNGSGETRÄNK**
REFRESHMENT DRINK
BOISSON RAFRAÎCHISSANTE

(30) Priorität: 11.04.2008 DE 102008018608
(43) Veröffentlichungstag der Anmeldung: 22.12.2010
(73) Patentinhaber: VLB Berlin E.V., 13363 Berlin (DE)
(72) Erfinder: STAHL, Ulf, 12161 Berlin (DE); MAST-GERLACH, Edeltraud, 10627 Berlin (DE); BADER, Johannes, 12163 Berlin (DE)
(74) Vertreter: Baumbach, Friedrich
(86) Internationale Anmeldenummer: PCT/DE2009/000449
(87) Internationale Veröffentlichungsnummer: WO 2009/124529

(56) Entgegenhaltungen:
- EP-A- 0 116 141
- EP-A- 0 223 705
- WO-A-95/22911
- DE-A1- 19 756 897
- DE-U1- 29 713 010
- JP-A- 60 094 076

## Beschreibung

Die Erfindung betrifft ein neuartiges Erfrischungsgetränk und ein Verfahren zu seiner Herstellung. Der Anwendungsbereich ist die Getränkeindustrie.

Grundsätzlich handelt es sich bei Erfrischungsgetränken um Getränke auf Wasserbasis mit geschmacksgebenden Stoffen, wie Zucker und Aromastoffen sowie anderen Zutaten. Es sind bereits viele verschiedene Erfrischungsgetränke bekannt, dazu zählen hauptsächlich Fruchtsaftgetränke, Fruchtschorlen, Limonaden und Brausen, aber auch koffeinhaltige Erfrischungsgetränke, wie Cola und verschiedene "Energy-Drinks". Oftmals enthalten diese Getränke jedoch einen hohen Anteil an Zucker und künstlichen Zusatzstoffen, so dass Verbraucher zunehmend zurückhaltend mit ihrem Konsum reagieren. Ein neuer Trend hat sich zu dem Genuss von Erfrischungsgetränken auf rein biologischer Basis entwickelt, wobei ein verringerter Zuckergehalt sowie eventuell enthaltene gesundheitsfördernde Komponenten eine große Rolle für den zunehmend gesundheitsbewussten Käufer spielen. Erfrischungsgetränke, die diese Voraussetzungen erfüllen, gewinnen stetig an Bedeutung in der Getränkeindustrie.

So ist bereits aus WO 9522911 ein kalorienarmes, alkoholfreies Erfrischungsgetränk bekannt, welches auf natürlichem Wege, durch Fermentation mit Mikroorganismen, hergestellt wird. Dazu wird eine stickstoffenthaltende wässrige Lösung, wie ein Extrakt aus Pflanzenteilen oder Bierwürze mit Glucose versetzt und mit einem Essigsäurebakterium, wie *GluconobacteroderAcetobacterfermentiert.* Das erhaltene Produkt enthält neben verschiedenen Mineralstoffen auch Gluconsäure, welche durch den Fermentationsprozess gebildet wird und gesundheitsfördernd wirken soll.

In DE 197 56 897 ist ebenfalls ein Verfahren zur Herstellung eines Erfrischungsgetränks mittels Fermentation eines Cerealienextrakts, wie z.B. Gerstenextrakt oder Bierwürze, durch Milchsäurebakterien, wie *Lactobacillus,* Essigsäurebakterien, wie *Gluconobacter* und Hefe beschrieben.
Die Fermentation wird in zwei Stufen durchgeführt. Es wird entweder zuerst eine Behandlung mit Hefe oder Hefelysat und Lactobacillus und anschliessend eine Gluconsäurebildung oder zuerst die Gluconsäurebildung und dann eine Milchsäuregärung durchführt. Das Produkt ist ebenfalls kalorienarm und enthält Mineralstoffe sowie durch den Fermentationsprozess gebildete Naturstoffe, wie Milchsäure und Gluconsäure. Zusätzlich ist der Alkoholgehalt so gering, dass das Produkt als alkoholfrei deklariert werden kann.

Tenge analysiert in "Getränkeindustrie" 10/2005 die verschiedenen Möglichkeiten der Herstellung neuer Malzgetränke mittels Fermentation durch Milchsäurebakterien. Dabei werden der Einfluss verschiedener Substrate verglichen und bewertet sowie die positiven gesundheitlichen Aspekte derartiger Getränke aufgezeigt. Tenge lobt den guten Geschmack von in ersten Versuchen erhaltenen Produkten und stellt eine vielversprechende Prognose für die zukünftige Nachfrage in diesem Zweig. Er stellt aber ebenfalls fest, dass viel Spielraum für innovative Produkte auf dem derzeitigen Markt besteht und weitere Forschungsarbeiten zur Entwicklung geeigneter Verfahrenstechniken für diese Produkte und deren Übertragung zur praktischen Anwendung in Brauereien unerlässlich sind.

Die Fermentation von Bierwürze durch Essigsäurebakterien, Milchsäurebakterien und Hefen ist auch beschrieben in Bader, Mast-Gerlach und Stahl, Brewing Science, September/Oktober 2007 sowie im Artikel der GIT Labor Fachzeitschrift 9/2007. Hier wird in einem ersten Schritt mit einer Mischkultur von Milchsäure- und Essigsäurebakterien fermentiert und nach entsprechender Produktion von Milchsäure und Gluconsäure in einem zweiten Schritt mit Hefe angeimpft und nochmals fermentiert. Die Feineinstellung der äußeren Parameter, wie Temperatur, Sauerstoffgehalt usw. ist dabei enorm wichtig. So wird der erste Schritt in eine aerobe und eine anaerobe Phase unterteilt, um den Fermentationsprozeß nacheinander durch die strikt aeroben Essigsäurebakterien und die anaeroben Milchsäurebakterien zu ermöglichen. Die Stabilität der gebildeten Säuren und der charakteristische Geschmack ist u.a. durch die Wahl der Mikroorganismenstämme gewährleistet, als Essigsäurebakterium wird *Gluconobacter G0104,* als Milchsäurebakterium *Lactobacillus L0610* und als Hefe *Kluyveromyces K0304* eingesetzt.

Die Mischkulturfermentation von Essigsäurebakterien und Milchsäurebakterien und ihre Kontrolle durch äußere Parameter, wie Temperatur, pH-Wert und Sauerstoffeintrag sind ausführlich in Bader et al., Labciencia 2007 dargestellt. Es wurde die gleichzeitige Bildung von Milch- und Gluconsäure in Mischkultur von Essigsäurebakterien und Milchsäurebakterien im Biostat Aplus Fermenter und ihre Regulierung durch den eingeleiteten Sauerstoff und die Temperatur untersucht. Dabei wird ein Fermentationsverfahren beschrieben, das die gleichzeitige Bildung von Milch- und Gluconsäure in Mischkultur, vorzugsweise bei einem Temperaturoptimum von 35°C und einem gemeinsamen pH-Optimum erlaubt.

Bader, Mast-Gerlach und Stahl haben weiterhin in einem Poster zur ECB13, Barcelona 2007, die Spaltung von Maltose durch das Essigsäurebakterium *Gluconobacter oxydans* unter anaeroben Bedingungen gezeigt. Daraus konnte geschlussfolgert werden, dass das aerobe Bakterium *Gluconobacter oxydans* ein aktives maltosespaltendes Enzym enthält, welches den Maltoseabbau unter anaeroben Bedingungen erlaubt, was vor allem in Fermentationschargen mit kurzen aeroben Recovery Phasen genutzt werden kann oder als Ersatz für die Verwendung von puren maltosespaltenden Enzymen.

In Bioperspectives 2006 ist dieses Verfahren von den gleichen Autoren zur Getränkeherstellung beschrieben. Im Gärkolben wird ein Getränk mit einem gleichen Anteil an Milchsäure und Gluconsäure hergestellt. Dieses wird zur weiteren Verarbeitung in einen Bioreaktor überführt. In einer anaeroben Phase wird durch die Essigsäurebakterien Maltose abgebaut und Glucose angereichert. Gleichzeitig wird weiterhin Milchsäure gebildet. In einer aeroben Phase wird dann die Gluconsäurekonzentration erhöht.

Im Schlussbericht zum AIF Vorhaben 13621 wird von Stahl die gleichzeitige Mischfermentation von Essigsäurebakterien und Milchsäurebakterien bei einer sehr geringen Konzentration an verfügbarem Sauerstoff beschrieben. Dabei wird die benötigte Glucose durch die Spaltung der Maltose mittels des ausgewählten Essigsäurebakteriums bereitgestellt. Das anschließende Animpfen mit einer Hefe, welche Glucose nicht vergären kann, ermöglicht die Herstellung eines alkoholarmen Getränks mit einem Alkoholgehalt von weniger als 0,5 Vol%.

Auch im Poster zur EBC 2007 in Venedig ist von Bader, Mast-Gerlach und Stahl das Prinzip der Mischfermentation dargestellt. Darin ist a) die Mischkulturfermentation mit Essigsäurebakterien und Milchsäurebakterien in zwei Phasen gezeigt, Produktion von Milchsäure bei 35°C unter anaeroben Bedingungen und Produktion von Gluconsäure bei 26°C unter aeroben Bedingungen, und b) die simultane Produktion von Milch- und Essigsäure bei geringer Sauerstoffzufuhr und einem optimalen pH-Wert sowie einer optimalen Temperatur. Ein zusätzliches Animpfen mit Hefe wird erwähnt.

Trotz zahlreicher Publikationen zur Herstellung neuartiger biologischer Erfrischungsgetränke auf Fermentationsbasis ist die Menge und Vielfalt der erhältlichen Produkte gering. Es besteht weitaus mehr Bedarf an derartigen Produkten als bisher zur Verfügung stehen. Viele neue und vielversprechende Ansätze zu ihrer Herstellung sind beschrieben, aber es sind bisher doch kaum realisierbare, für Brauereien einfach umsetzbare, effiziente und profitable Verfahren bekannt. Es besteht also ein enormer Bedarf für diese neuartigen Erfrischungsgetränke sowie für praktisch umsetzbare Verfahrenstechniken zu ihrer Herstellung.

Der Erfindung liegt die Aufgabe zugrunde, neuartige Getränke auf der Basis von Würze zu entwickeln, welche ernährungsphysiologisch hochwertige und bioverfügbare Bestandteile enthalten, eine niedrige Alkoholkonzentration aufweisen und dem neuen Geschmackstrend entsprechen. Ferner sollen praktikable, ökonomisch günstige Verfahren zu ihrer Herstellung bereitgestellt werden.

Im Einzelnen sollen die Getränke u.a. gesundheitsfördernde Komponenten, wie sie bei Gärungsprozessen mit Mikroorganismen entstehen, enthalten. Die Herstellung der Produkte soll vorzugsweise mit der standardmäßigen Ausrüstung einer Brauerei realisierbar sein. Damit soll den Brauereien ermöglicht werden, neben dem traditionellen Bier ein weiteres Naturprodukt herstellen zu können, welches ein Erfrischungsgetränk mit einem Alkoholgehalt von weniger als 4g/l und einem völlig neuartigen Geschmack ist.

Die Erfindung wird gemäß den Ansprüchen realisiert.

Kernpunkt der Erfindung ist ein Erfrischungsgetränk, welches dadurch erhältlich ist, dass in einer für die Fermentation von Mikroorganismen geeigneten, N- und C-haltigen Ausgangsflüssigkeit mit den Mikroorganismenarten Hefe, Milchsäurebakterien und Essigsäurebakterien fermentiert wird, wobei in den folgenden zwei Schritten fermentiert wird:
a. Gleichzeitiges Animpfen mit Milchsäurebakterien und Essigsäurebakterien
b. anschließend Animpfen mit Hefe
und wobei als Hefe Hefen, die keine Maltose abbauen können, vorzugsweise *Kluyveromyces lactis* und/oder *Kluyveromyces marxianus* eingesetzt werden

Vorzugsweise erfolgt mit dem Animpfen der der Hefe die Zugabe von frischer Würze.

Als Ausgangsflüssigkeit wird vor allem Bierwürze eingesetzt, besonders bevorzugt ist hierbei 8-20%ige ungehopfte Bierwürze. In besonderen Ausführungsformen wird Bierwürze mit einem erhöhtem Glucosegehalt von 30-70 g/l und gegebenenfalls weiteren Zusätzen verwendet. Als Zusätze werden hauptsächlich Pflanzenextrakte, insbesondere Fruchtextrakte, Gemüseextrakte, Kräuterextrakte und Mischungen hieraus eingesetzt, aber auch andere sind verwendbar.

Die Fermentation wird bei Temperaturen zwischen 25°C und 38°C und in einem pH-Bereich von 3-8 durchgeführt. Der Fermentationsprozess wird bevorzugt bei einem Alkoholgehalt von unter 4g/l abgebrochen. Dies ermöglicht die Deklarierung des Produkts als alkoholfrei.

Überraschenderweise konnte festgestellt werden, dass durch den Einsatz spezieller Hefen ein ganz besonderer, neuartiger und angenehmer Geschmack erzielt wird. Es handelt sich dabei um Hefen, welche keine Maltose abbauen können, wie beispielsweise *Kluyveromyces factis* und *Kluyveromyces marxianus.* Bisher wurden diese Hefen lediglich in der Milchindustrie zur Zubereitung von Kefir und Käse verwendet. Die Anwendung dieser Hefen für die Vergärung von Würze oder Würzeprodukten war bislang absolut unüblich.

Als Milchsäurebakterium wird bevorzugt *Lactobacillus casei*, *Lactobacillus casei subsp. casei* (DSMZ 20312) oder *Lactobacillus rhamnosus* eingesetzt. Als Essigsäurebakterium wird vorzugsweise *Gluconobacter oxydans* verwendet. Andere Mikroorganismenstämme dieser Arten sind ebenfalls einsetzbar.

In einer ersten Ausführungsform der Erfindung wird das Substrat mit allen drei Mikroorganismenarten angeimpft.
- In einer besonderen Ausführungsvariante erfolgt die Animpfung mit allen drei Mikroorganismenarten gleichzeitig.
Die Fermentation wird vorzugsweise für 40h und bei einer Temperatur von 26°C durchgeführt.
Als Substrat wird bevorzugt 12%ige ungehopfte Würze mit einem erhöhten Glucosegehalt von 30-70 g/l und besonders bevorzugt von 50 g/l eingesetzt.

In weiteren Ausführungsvarianten der Erfindung erfolgt die Animpfung mit den Mikroorganismen zu verschiedenen Zeitpunkten.
- Das Erfrischungsgetränk wird erhalten, indem in den folgenden drei Schritten fermentiert wird. Zuerst wird das Substrat mit Essigsäurebakterien angeimpft und eine aerobe Fermentation unter Bildung von Gluconsäure bis zu einer Mindestkonzentration an Gluconsäure von 6 g/l durchgeführt. Anschließend wird frische Würze zugegeben. Die Menge ist abhängig von der vorliegenden Gluconsäurekonzentration. Die Endkonzentration an Gluconsäure nach der Zugabe der frischen Würze sollte mindestens 3 g/l betragen. Während der darauf folgenden anaeroben Fermentation findet die Spaltung der Maltose statt und die erhaltene Glucose akkumuliert. Anschließend erfolgt das Animpfen mit der Hefe und den Milchsäurebakterien und die weitere Fermentation.
Erfindungsgemäß wird im ersten Schritt zusätzlich ein teilweise nicht-Gluconsäurelieferndes Substrat-(Gemisch) verwendet und so lange fermentiert, bis die Konzentration der erhaltenen Gluconsäure 30g/l übersteigt. Der zweite Schritt wird durchgeführt, bis die Konzentration der entstehenden Glucose bei mindestens 30 g/l liegt.

Nach ausreichender Akkumulation der Glucose erfolgt das Animpfen mit der Hefe und den Milchsäurebakterien. Dabei ist es wichtig, dass der pH-Wert auf über 4,5 angehoben wird. Dies wird durch Zugabe von Magnesium- oder Calciumcarbonaten bzw. -hydroxiden realisiert. Die Gärung erfolgt bei 26 °C. Der Abbruch der Fermentation erfolgt bevorzugt bei einem Alkoholgehalt von unter 4 g/l.
- Neben der Spaltung der Maltose durch das Essigsäurebakterium ist es ebenfalls möglich, eine erhöhte Glucosekonzentration durch den Einsatz von Würze, durch ein geeignetes Maischeverfahren, durch die Verwendung geeigneter Rohstoffe oder durch Enzymzusatz zu erreichen.
So wird in einer weiteren Ausführungsvariante in zwei Schritten fermentiert. Im ersten Schritt wird eine Würze mit erhöhtem Glucosegehalt mit Essigsäurebakterien angeimpft und eine aerobe Fermentation unter Bildung von Gluconsäure für 10 bis 200h, vorzugsweise für 60-80h, durchgeführt. Im zweiten Schritt wird mit Hefe und Milchsäurebakterien angeimpft und bis zum Erreichen des gewünschten Produkts fermentiert. Die Fermentation wird bei einem Alkoholgehalt von weniger als 4 g/l und einer Milchsäurekonzentration zwischen 3-30 g/l, bevorzugt 3 g/l abgebrochen.

Alle Schritte werden bevorzugt bei 26°C durchgeführt und für die Fermentation mit Hefe und Milchsäurebakterien wird der pH durch Zugabe von Magnesium- oder Calciumcarbonaten oder -hydroxiden auf über 4,5 angehoben.
- Eine weitere Variante der Erfindung ist dadurch gekennzeichnet, dass die eingesetzte Würze mit Milchsäurebakterien und Essigsäurebakterien angeimpft und bei 25-38°C, vorzugsweise bei 35°C fermentiert wird. Dabei findet die gleichzeitige Bildung der Milch- und Gluconsäure statt. Der pH-Wert wird vorzugsweise auf 5,5 geregelt, andere pH-Werte im Bereich von 3 bis 8 sind jedoch ebenfalls möglich. Darauf folgt die Aromabildung durch Animpfen mit der Hefe und die Gärung. Bei Bedarf kann zuvor frische Würze zugegeben werden. Es wird frühestens angeimpft, wenn die Konzentration der gebildeten Milchsäure und der gebildeten Gluconsäure jeweils 3 g/l übersteigt. Während des weiteren Fermentationsprozesses ist ein Abfall des pH-Wertes unter pH=4,0 zu vermeiden. Die pH-Regelung erfolgt auch hier mit Magnesium- oder Calciumcarbonaten bzw. -hydroxiden.

In einer besonderen Ausführungsform der Erfindung ist das Erfrischungsgetränk dadurch gekennzeichnet, dass es zusätzlich mikrobiologisch gebildete Folsäure (Vit. B9) und / oder mikrobiologisch gebildetes Cobalamin (Vit. B12) enthält.

Die Anreicherung mit Folsäure wird dadurch erreicht, dass das erfindungsgemäße Erfrischungsgetränk zusätzlich mit mindestens einem Folsäure synthetisierenden Mikroorganismusstamm *angeimpft wird*.
Als Folsäure synthetisierende Mikroorganismusstämme sind dabei *Yarrowia lipolytica, Hansenula glucozyma, Lactobacillus reuteri, Lactococcus lactis (lactis), Lactococcus fermentum, Propionibacterium acidipropionicii, Propionibacterium freudenreichii, Saccharomyces italicus, Kluyveromyces lactis und*/*oder Gluconobacter oxydans besonders bevorzugt.*

Die Anreicherung des Erfrischungsgetränkes mit mikrobiologisch gebildetem Cobalamin (Vit. B12) wird durch das zusätzliche Animpfen mit einem Cobalamin synthetisierenden Mikroorganismusstamm *erreicht.*
Dabei sind als Cobalamin synthetisierende Mikroorganismusstämme *Torulopsis glabrata, Lactococcus lactis (lactis), Kluyveromyces lactis, Yarrowia lipolytica, Hansenula glucozyma, Saccharomyces italicus, Lactobacillus reuterie, Lactobacillus fermentum, und*/*oder Lactobacillus casei besonders bevorzugt.*

Der Animpfvorgang mit mindestens einem Cobalamin synthetisierenden und/ oder mindestens einem Folsäure synthetisierenden Mikroorganismusstamm kann gleichzeitig oder getrennt mit einem der bereits beschriebenen Animpfvorgänge zum Erhalt des Erfrischungsgetränks durchgeführt werden.
Dies richtet sich hauptsächlich nach dem zu verwendenden Mikroorganismus und seinen Fermentationseigenschaften. Aber auch hinsichtlich verschiedener geschmacklicher Ausprägungen kann hier variiert werden.
Die systematische Einordnung der bevorzugt verwendeten Stämme ist im Folgenden aufgeführt:
Anreicherung des Gärgetränkes mit mikrobiologisch gebildeter Folsäure (Vit. B9)durch den Einsatz einer oder mehrerer der folgenden Mikroorganismen in Einzel- oder Mischkultur, eventuell in Verbindung mit den bereits genannten Organismen:
   Stämme *Yarrowia lipolytica, Hansenula glucozyma, Lactobacillus reuteri, Lactococcus lactis (lactis), Lactococcus fermentum, Propionibacterium acidipropionicii* und *Propionibacterium freudenreichii*, *Saccharomyces italicus, Kluyveromyces lactis, Gluconobacter oxydans*

| **Gattung, Art** | ***Gehört zu*** |
|---|---|
| *Saccharomyces italicus* | Hefen |
| *Kluyveromyces lactis* | Hefen |
| *Gluconobacter oxydans* | Essigsäurebakterien |
| *Propionibacterium freudenreichii,* | Milchsäurebakterien |
| *Propionibacierium acidipropionicii* | Milchsäurebakterien |
| *Lactococcus fermentum* | Milchsäurebakterien |
| *Lactococcus lactis* | Milchsäurebakterien |
| *Lactobacillus reuteri* | Milchsäurebakterien |
| *Hansenula glucozyma* | Hefen |
| *Yarrowia lipolytica* | Hefen |

Anreicherung des Gärgetränkes mit mikrobiologisch gebildeter Cobalamin (Vit. B12) durch den Einsatz einer oder mehrerer der folgenden Mikroorganismen in Einzel- oder Mischkultur, eventuell in Verbindung mit den bereits genannten Organismen:
*Torulopsis glabrata, Lactococcus lactis (lactis), Kluyveromyces lactis, Yarrowia lipolytica, Hansenula glucozyma, Saccharomyces italicus, Lactobacillus reuterie, Lactobacillus fermentum, Lactobacillus casei*

| **Gattung, Art** | ***Gehört zu*** |
|---|---|
| *Torulopsis glabrata* | Hefen |
| *Lactococcus lactis* | Milchsäurebakterien |
| *Kluyveromyces lactis* | Hefen |
| *Yarrowia lipolytica,* | Hefen |
| *Hansenula glucozyma* | Hefen |
| *Saccharomyces italicus* | Hefen |
| *Lactobacillus reuteri* | Milchsäurebakterien |
| *Lactobacillus fermentum* | Milchsäurebakterien |
| *Lactobacillus casei* | Milchsäurebakterien |

*In einer anderen bevorzugten Ausführungsform der Erfindung ist das Erfrischungsgetränk dadurch erhältlich, dass ein auf erfindungsgemäßem Weg erhaltenes Erfrischungsgetränk zusätzlich* mit mikrobiologisch gebildeter Folsäure (Vit. B9) und / oder mikrobiologisch gebildetem Cobalamin (Vit. B12) versetzt wird. Dies kann durch das Zufügen einer, diese Stoffe enthaltenden Flüssigkeit, vorzugsweise die, gegebenenfalls weiter behandelte, Kulturflüssigkeit aus der Fermentation erfolgen.
Dabei wird die mikrobiologisch gebildete Folsäure getrennt durch eine Fermentation einer für die Fermentation von Mikroorganismen geeigneten, N- und C-haltigen Ausgangsflüssigkeit erhalten. Das mikrobiologisch gebildete Cobalamin wird ebenfalls durch eine getrennte Fermentation einer für die Fermentation von Mikroorganismen geeigneten, N- und C-haltigen Ausgangsflüssigkeit erhalten.
Die Fermentationen zum Erhalt von Folsäure und Cobalamin können ebenfalls gemeinsam durchgeführt werden.
Vorzugsweise wird als Ausgangsflüssigkeit die selbe Flüssigkeit, wie in der vorangegangenen Fermentation bzw. den vorangegangenen Fermentationen verwendet.
In einer anderen Ausführungsform wird eine andere Flüssigkeit, wie in der vorangegangenen Fermentation bzw. den vorangegangenen Fermentationen verwendet um interessante geschmackliche Abstufungen zu erzielen.

Die Fermentation zur Gewinnung von Folsäure wird vorzugsweise mit mindestens einem der Stämme *Yarrowia lipolytica, Hansenula glucozyma, Lactobacillus reuteri, Lactococcus lactis (lactis), Lactococcus fermentum, Propionibacterium acidipropionicii, Propionibacterium freudenreichii, Saccharomyces italicus, Kluyveromyces lactis und*/*oder Gluconobacter oxydans durchgeführt.*

Die Fermentation zur Gewinnung von Cobalamin wird vorzugsweise mit mindestens einem der Stämme durch mindestens einem der Stämme *Torulopsis glabrata, Lactococcus lactis (lactis), Kluyveromyces lactis, Yarrowia lipolytica, Hansenula glucozyma, Saccharomyces italicus, Lactobacillus reuterie, Lactobacillus fermentum, und*/*oder Lactobacillus casei durchgeführt.*

Die angegebenen Verfahrensmerkmale dienen zur Charakterisierung des Erfrischungsgetränks als solches. Es ist nicht ausgeschlossen, dass dieses Getränk auch auf andere Weise hergestellt werden kann. Das erhaltene Erfrischungsgetränk ist natürlich gebraut und enthält Mineralstoffe und weitere Inhaltsstoffe, die gesundheitsfördernde Eigenschaften haben. Durch die Variation der genannten Parameter können unterschiedlich gefärbte und unterschiedlich schmeckende Erfrischungsgetränke mit geringem Alkoholgehalt hergestellt werden. Vor allem die Variation der Fermentationsdauer innerhalb der angegebenen Rahmen führt zu weiteren interessanten Abstufungen im Geschmack.

Die Herstellung des erfindungsgemäßen Erfrischungsgetränks wird nachstehend anhand von Beispielen näher erläutert.

### Ausführungsbeispiel 1

### Gleichzeitige Gärung von Gluconobactersp., Lactobacillus sp. und Kluyveromyces sp.

Als Substrat für die gleichzeitige Gärung mit den drei genannten Mikroorganismen dient Würze (Cerealien-Exträkt). Der Stammwürzegehalt liegt bei 8-20% und die Zuckerkonzentration zwischen 30 und 100g/l und können in diesen Bereichen variiert werden. Für die Aromaproduktion durch die Hefe hat sich die Verwendung eines Substrates mit einer Glucosekonzentration von 50 g/l als positiv heraus gestellt. Diese Konzentration an Glucose kann sowohl durch direkte Zugabe des Monosaccharids, durch Verwendung von Glucose-liefernden Zuckerverbindungen, oder durch ein geeignetes Herstellungsverfahren des Substrates erzielt werden. Die Anzucht der benötigten Vorkulturen erfolgt dabei ebenfalls in Würze. Gluconobacter und die Hefe werden unter aeroben Bedingungen angezogen, das Milchsäurebakterium unter Ausschluss von Sauerstoff. Bevorzugte Temperaturen für die Anzucht der Vorkulturen sind für Hefe 26°C, für Gluconobacter 26°C und für Milchsäurebakterien 26-47°C. Andere Temperaturen sind möglich. Je nach gewünschtem Säuregehalt erfolgt das Animpfen der Hauptkultur mit unterschiedlichen Volumina der jeweiligen bakteriellen Vorkulturen. Der Ethanolgehalt des Getränks kann ebenfalls durch die Animpfkonzentration aber auch durch die Gärdauer bestimmt werden. Die Hauptgärung erfolgt bei einer Temperatur von 26 °C. Während der Hauptgärung ist ein Abfall des pH-Werts unter 3,9 zu vermeiden. Dies erfolgt durch eine pH-Regelung oder durch die Anpassung der eingesetzten Volumina der bakteriellen Vorkulturen. Die Gärung wird abgebrochen, bevor der Ethanolgehalt 4 g/l erreicht.

### Ausführungsbeispiel 2

### Erhöhung der Glucosekonzentration durch Gluconobactersp.

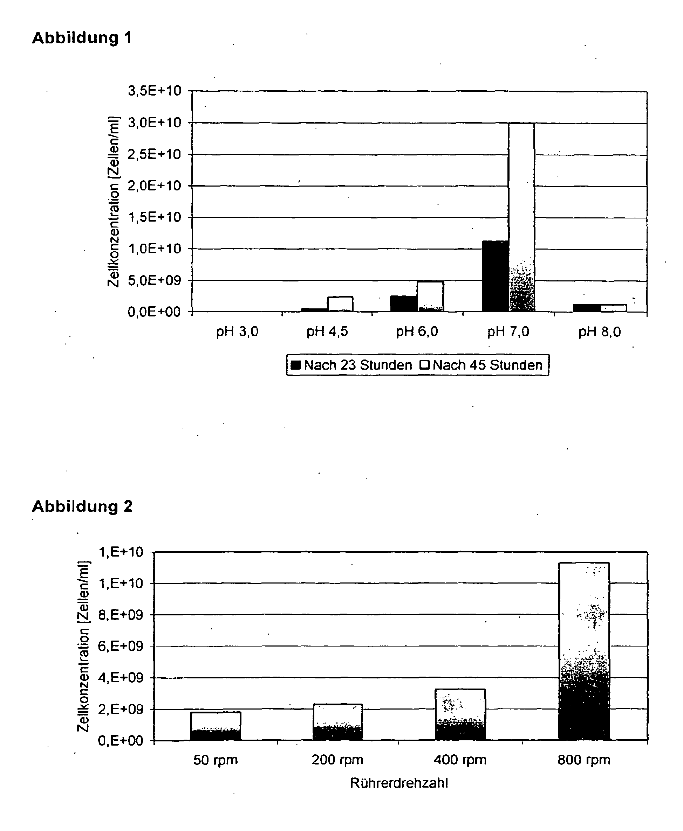

Die Anpassung der Glucosekonzentration an die Bedürfnisse der eingesetzten Hefe bei Verwendung herkömmlicher Pilswürze erfolgt durch Nutzung der enzymatischen Leistung von *Gluconobacter sp..* Dazu erfolgt die Anzucht von *Gluconobacter sp.* in Reinkultur unter aeroben Bedingungen. Zur optimierten Bildung der Biomasse wird der pH-Wert auf 7,0 reguliert **(****Abbildung 1****)**.

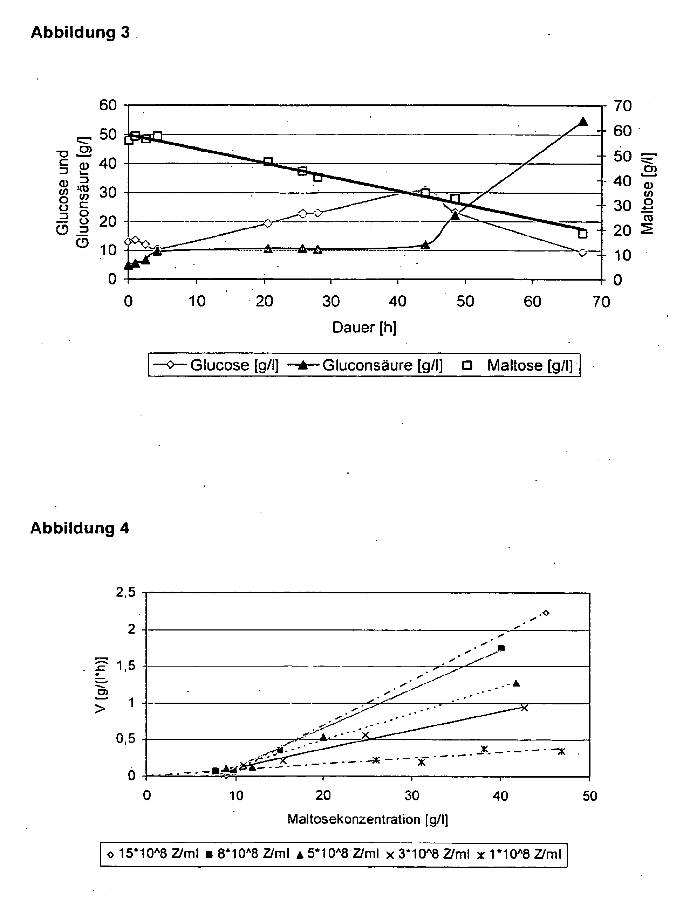

Als Substrate dienen sowohl Würze als auch nicht Säure-bildende Substrate in verschiedenen Mischungsverhältnissen. Für die Bildung einer hohen Biomassekonzentration wirkt sich ein möglichst hoher Sauerstoffeintrag positiv aus **(****Abbildung 2****)**.
Nach der Anzucht der *Gluconobacter*-Kultur erfolgt die Zugabe frischer Würze, wobei über den Stammwürzegehalt die maximal zu erreichende Glucosekonzentration gesteuert werden kann. Während der anschließenden anaeroben Inkubation erfolgt die Spaltung der Maltose, einhergehend mit der gleichzeitigen Akkumulation von Glucose bis zur gewünschten Konzentration **(****Abbildung 3****)**.
Dabei ist die Spaltungsgeschwindigkeit der Maltose direkt abhängig von der eingesetzten Biomassekonzentration **(****Abbildung 4****)**. Eingesetzt werden können ebenfalls Hydrolysate von *Gluconobacter-*Stämmen.
Im Anschluss an die Erhöhung der Glucosekonzentration erfolgt das Animpfen mit den Milchsäurebakterien und der Hefe. Die folgende Gärung verläuft bei 26 °C. Über die Gärdauer sowie die Animpfkonzentration der Hefe wird der Alkoholgehalt gesteuert. Die gebildete Milchsäurekonzentration wird ebenfalls über die Animpfrate beeinflusst. Ein Absinken des pH-Wertes unter 3,9 ist durch geeignete Maßnahmen zu vermeiden. Zu nennen sind dabei der limitierte Eintrag von Gluconsäure, die kontrollierte Bildung der Milchsäure und eine eventuelle pH-Kontrolle durch Zugabe von geeigneten Alkali- oder Erdalkali-hydroxyden bzw. -carbonaten. Die Produktion eines als "alkoholfrei" deklarierten Getränks wird ermöglicht.

### Ausführungsbeispiel 3

### Vergärung von Würze mit Fruchtextrakten

Als Substrat für dieses Verfahren werden Würze und Fruchtextrakte bzw. Bestandteile von Früchten in unterschiedlichen Verhältnissen und Konzentrationen miteinander gemischt.
Die Fermentation wird durch das Animpfen mit Milchsäurebakterien in Reinkultur gestartet. Nach einer ausreichenden Vermehrung der Milchsäurebakterien, verbunden mit der Bildung von Milchsäure und der gleichzeitigen Hydrolyse von Proteinen in der Würze erfolgt die Zugabe der Hefe. Eine ausreichende Vermehrung der Milchsäurebakterien liegt vor, wenn die Milchsäurekonzentration 3-10 g/l erreicht hat. Ab der Zugabe der Hefe ist die Temperatur auf 26 °C zu regulieren. Das gesamte Verfahren findet ohne pH-Regelung unter anaeroben Bedingungen statt. Der Alkoholgehalt wird durch die Animpfrate an Hefe sowie die Gärdauer kontrolliert. Die Produktion eines als "alkoholfrei" deklarierten Getränks wird ermöglicht.

### Ausführungsbeispiel 4

### Gleichzeitige Bildung von Milch- und Gluconsäure

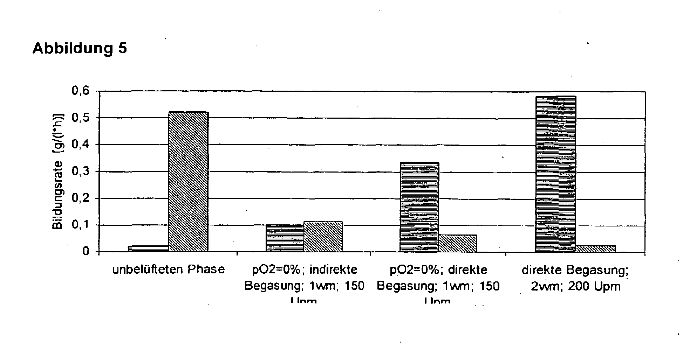

Als Substrat für dieses Verfahren dient Bierwürze oder andere kohlenstoffhaltige Nährmedien, die von den eingesetzten Stämmen zur Bildung der Milch- und Gluconsäure genutzt werden. Die im Medium enthaltenen Konzentrationen an verwertbaren Sacchariden begrenzen dabei die maximal erreichbaren Säurekonzentrationen. Während des Verfahrens kann eine Zufütterung von weiteren Sacchariden oder Saccharid-liefernden Substraten erfolgen.
Das Animpfen des Mediums im Bioreaktor erfolgt gleichzeitig mit *Gluconobacter sp.* und *Lactobacillus sp.* Die Belüftungsrate ist so zu wählen, dass die gewünschten Konzentrationen an beiden Säuren gleichzeitig gebildet werden können. Dabei bewirkt ein höherer Sauerstoffeintrag eine verstärkte Bildung von Gluconsäure und eine gleichzeitige Absenkung der Milchsäureproduktion (**Abbildung 5**). Die Steuerung erfolgt weiterhin durch die Kontrolle der Fermentationstemperatur. Bei 26 °C erfolgt die schnellste Bildung von Gluconsäure **(Abbildung** 6). Durch eine Erhöhung der Temperatur wird die Milchsäurebildung verstärkt (Fehler! Verweisquelle konnte nicht gefunden werden.), wobei gleichzeitig weniger Gluconsäure gebildet wird.

Das Vermeiden eines pH-Abfalls unter 4,0 ist für die Bildung der organischen Säuren vorteilhaft.
Nach der gleichzeitigen Bildung der gewünschten Mengen an Milch- und Gluconsäure ist neues Medium zuzuführen und es erfolgt die anschließende Gärung mit der frisch zugesetzten Hefe. Dabei ist ein pH-Wert von über 3,9 vorteilhaft für die Geschmacksbildung.
Der Alkoholgehalt kann durch die Animpfrate an Hefe sowie die Gärdauer kontrolliert werden. Die Produktion eines als "alkoholfrei" deklarierten Getränks ist möglich.

**Verwendete Mikroorganismen**

| | |
|---|---|
| Hefe: | *Kluyveromyces lactis* oder *Kluyveromyces marxianus* |
| Milchsäurebakterien: | *Lactobacillus casei, Lactobacillus casei subsp. casei* (DSMZ 20312) oder *Lactobacillus rhamnosus* |
| Essigsäurebakterien: | *Gluconobacter oxydans* |

### Legende zu den Abbildungen

### Abbildung 1: Vermehrung von Gluconobacter sp. in Abhängigkeit des pH-Wertes

Die Versuche wurden im Bioreaktor bei einer Temperatur von 26 °C, einer Belüftungsrate von 1 wm und einer Rührergeschwindigkeit von 200 Upm durchgeführt. Die Animpfrate beträgt jeweils 1*10⁷ Zellen/ml.

### Abbildung 2: Biomassebildung durch Gluconobacter sp. in Abhängigkeit des Sauerstoffeintrags

Der Einfluss der Steigerung des Sauerstoffeintrags auf die Biomassebildung wird durch die Erhöhung der Rührerdrehzahl im Bioreaktor bei einem konstantem pH-Wert von 7,0, einer Temperatur von 26 °C und einer Belüftungsrate von 1 wm innerhalb von 43 h untersucht

### Abbildung 3: Hydrolyse der Maltose durch Gluconobacter sp.

Fermentation von *Gluconobacter sp.* in 12 %iger Würze bei einer Temperatur von 26 °C im Bioreaktor. Zwischen Stunde 5 und 44 lagen anaerobe Bedingungen vor (grau).

### Abbildung 4: Maltosespaltung in Abhängigkeit der Substrat- und Zellkonzentration

Dargestellt sind die Spaltungsgeschwindigkeiten der Maltose in Abhängigkeit der vorliegenden Maltosekonzentration bei unterschiedlichen Zellkonzentrationen von *Gluconobacter sp.* unter anaeroben Bedingungen und einer Temperatur von 26 °C. Die dargestellten Werte sind Mittelwerte aus Doppelbestimmungen

### Abbildung 5: Steuerung der gleichzeitigen Produktbildung in Mischkultur

Die Produktionsraten von Milch- und Gluconsäure durch die Mischkultur bestehend aus dem anaeroben *Lactobacillus sp.* und dem strikt aeroben *Gluconobacter sp.* können im Bioreaktor bei 26 °C durch den Sauerstoffeintrag gezielt gesteuert werden.

### Abbildung 6: Temperaturabhängigkeit der Gluconsäurebildung durch Gluconobacter sp.

Konzentration der gebildeten Gluconsäure sowie die Maltosekonzentration im Medium nach 24 Stunden Inkubation von *Gluconobacter sp.* im 500 ml Schüttelkolben, gefüllt mit 200 ml 12 %iger Würze bei 150 Upm in Abhängigkeit von der Temperatur. Dargestellt sind die Mittelwerte aus den dreifachen Bestimmungen sowie die errechneten Standardabweichungen.

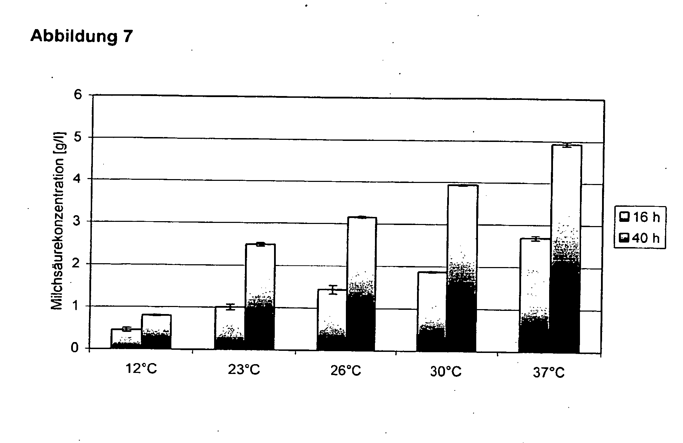

### Abbildung 7: Milchsäurebildung durch Lactobacillus sp. in Abhängigkeit von der Temperatur

Konzentration der gebildeten Milchsäure nach 24 und 40 Stunden bei anaerober Inkubation des Milchsäurebakteriums in stationärer Kultur bei unterschiedlichen Temperaturen in 12 %iger Würze. Die dargestellten Mittelwerte und Fehlerbalken wurden aus 5fach-Bestimmungen errechnet.

## Patentansprüche

1. Verfahren zur Herstellung eines Erfrischungsgetränks, **dadurch gekennzeichnet, dass** in einer für die Fermentation von Mikroorganismen geeigneten, N- und C-haltigen Ausgangsflüssigkeit mit den Mikroorganismenarten Hefe, Milchsäurebakterien und Essigsäurebakterien fermentiert wird, wobei in den folgenden zwei Schritten fermentiert wird
a. Gleichzeitiges Animpfen mit Milchsäurebakterien und Essigsäurebakterien
b. anschließend Animpfen mit Hefe
und wobei als Hefe Hefen, die keine Maltose abbauen können, vorzugsweise *Kluyveromyces lactis* und/oder *Kluyveromyces marxianus* eingesetzt werden.

2. Verfahren nach Anspruch 1, **dadurch gekennzeichnet, dass** mit dem Animpfen der Hefe die Zugabe von frischer Würze erfolgt.

3. Verfahren nach einem der Ansprüche 1 - 2, wobei als Ausgangsflüssigkeit 8 - 20 % ungehopfte Bierwürze, Bierwürze oder Bierwürze mit erhöhtem Glucosegehalt von 30-70 g/l und gegebenenfalls weiteren Zusätzen eingesetzt wird.

4. Verfahren nach einem der Ansprüche 1 - 3, wobei als Essigsäurebakterium Gluconobacter oxydans eingesetzt wird.

5. Verfahren nach einem der Ansprüche 1-4, wobei die Fermentation bei einem Alkoholgehalt von unter 4g/l abgebrochen wird.

6. Verfahren nach einem der Ansprüche 1-5, dadurch erhältlich, dass es zur Anreicherung des Erfrischungsgetränkes mit mikrobiologisch gebildeter Folsäure (Vit. B9) zusätzlich mit mindestens einem Folsäure synthetisierenden Mikroorganismusstamm angeimpft wird.

7. Verfahren nach einem der Ansprüche 1-6, dadurch erhältlich, dass es zur Anreicherung des Erfrischungsgetränkes mit mikrobiologisch gebildetem Cobalamin (Vit. B12) zusätzlich mit mindestens einem Cobalamin synthetisierenden Mikroorganismusstamm angeimpft wird.

8. Verfahren nach einem der Ansprüche 1 - 7, **dadurch gekennzeichnet dass** es mit mikrobiologisch gebildeter Folsäure (Vit. B9) und / oder mikrobiologisch gebildetem Cobalamin (Vit. B 12) versetzt wird.

## Claims

1. Procedure for the production of a liquid refreshment wherein there is fermentation in an initial fluid suited for the fermentation of microorganisms containing N and C with the yeast, lactic acid bacteria and acetic acid bacteria kinds of microorganisms, in which context fermentation is done in the following two steps
a. simultaneous inoculation with lactic acid bacteria and acetic acid bacteria
b. subsequently inoculation with yeast
and in which context yeasts which cannot decompose maltose, preferably *Kluyveromyces lactis* and/or *Kluyveromyces marxianus,* are used as yeast.

2. Procedure according to Claim 1, wherein fresh wort is added with the inoculation of the yeast.

3. Procedure according to one of the Claims 1 - 2, wherein 8 - 20 % hop-free beer wort, beer wort or beer wort with an increased glucose content of 30-70 g/l is used as the initial fluid and further ingredients are added if necessary.

4. Procedure according to one of the Claims 1 - 3, wherein Gluconobacter oxydans are used as acetic acid bacteria.

5. Procedure according to one of the Claims 1 - 4, wherein the fermentation is stopped with an alcohol content of less than 4g/l.

6. Procedure according to one of the Claims 1 - 5, to be obtained by inoculation additionally being done with at least one stem of microorganisms synthesising folic acid in order to enrich the liquid refreshment with microbiologically formed folic acid (Vit. B9).

7. Procedure according to one of the Claims 1 - 6, to be obtained by inoculation additionally being done with at least one stem of microorganisms synthesising cobalamin in order to enrich the liquid refreshment with microbiologically formed cobalamin (Vit. B12).

8. Procedure according to one of the Claims 1 - 7, wherein microbiologically formed folic acid (Vit. B9) and / or microbiologically formed cobalamin (Vit. B12) is/are added to it.

## Revendications

1. Procédé pour la fabrication d'une boisson rafraîchissante, **caractérisé par le fait que** la fermentation est réalisée dans un liquide de base à teneurs N et C, approprié à la fermentation de microorganismes, avec les microorganismes levure, bactéries lactiques et acétiques, la fermentation s'opérant dans les deux étapes suivantes :
a. Inoculation simultanée avec bactéries lactiques et acétiques
b. puis, inoculation avec levures,
les levures utilisées étant des levures qui ne peuvent pas dégrader le maltose, de préférence *Kluyveromyces lactis* et/ou *Kluyveromyces marxianus.*

2. Procédé conformément à la revendication n°1, **caractérisé par le fait que** l'ajout de moût frais s'opère avec l'inoculation de la levure.

3. Procédé conformément à l'une des revendications n° 1 à n° 2, le liquide de base utilisé étant 8 % à 20 % de moût de bière non houblonné, de moût de bière ou de moût de bière avec teneur accrue en glucose de 30-70 g/l et éventuellement d'autres additifs.

4. Procédé conformément à l'une des revendications n° 1 à n° 3, la bactérie acétique utilisée étant Gluconobacter oxydans.

5. Procédé conformément à l'une des revendications n° 1 à n° 4, la fermentation étant interrompue à une teneur en alcool inférieure à 4 g/l.

6. Procédé conformément à l'une des revendications n° 1 à n° 5, pouvant être obtenu par une inoculation supplémentaire avec au moins une souche de microorganisme synthétisant l'acide folique pour l'enrichissement de la boisson rafraîchissante avec acide folique formé microbiologiquement (Vit. B9).

7. Procédé conformément à l'une des revendications n° 1 à n° 6, pouvant être obtenu par une inoculation supplémentaire avec au moins une souche de microorganisme synthétisant la cobalamine pour l'enrichissement de la boisson rafraîchissante avec cobalamine formée microbiologiquement (Vit. B12).

8. Procédé conformément à l'une des revendications n° 1 à n° 7, **caractérisé par le fait qu'**un mélange est effectué avec l'acide folique formé microbiologiquement (Vit. B9) et / ou la cobalamine formée microbiologiquement (Vit. B12).
